# EUROPEAN PATENT SPECIFICATION

(11) **EP 1 309 152 B1**
(45) Date of publication and mention of the grant of the patent: **14.06.2006**
(21) Application number: 02257706.8
(22) Date of filing: 06.11.2002
(51) Int. Cl.: H04L 29/06, H04L 29/12

(54) **System and method for facilitating the selection of electronic services using infrared and a network address identification**
Vorrichtung und Verfahren zur Förderung der Auswahl von elektronischer Diensten mittels Infrarot und mittels Netzwerkadressenidentifikation
Système et procédé pour faciliter la sélection de service électroniques utilisant infrarouge et utilisant l' identification d'adresses de réseau

(30) Priority: 06.11.2001 GB 0126649
(43) Date of publication of application: 07.05.2003
(73) Proprietor: Mitel Networks Corporation, Ottawa, Ontario K2K 2W7 (CA)
(72) Inventor: Liscano, Ramiro, Ottawa, Ontario (CA); Azondekon, Victor, Hull, Quebec (CA); Barbeau, Michel, Ottawa, Ontario (CA)
(74) Representative: Gold, Tibor Zoltán

(56) References cited:
- EP-A- 1 024 628
- WO-A-98/17032
- GB-A- 2 352 588
- HIGHTOWER J ET AL: "LOCATION SYSTEMS FOR UBIQUITOUS COMPUTING" COMPUTER, IEEE COMPUTER SOCIETY, LONG BEACH., CA, US, US, August 2001 (2001-08), pages 57-66, XP001093027 ISSN: 0018-9162

## Description

### Field of the Invention

The present invention relates to Ad Hoc communications and in particular to electronic service selection and association using wireless communication and network address identification.

### Background of the Invention

A variety of mobile wireless electronic devices are available, including laptop personal computers, personal digital assistants and the like. In many instances, it is useful to connect these mobile devices to a host network for use of various services available on the host network. The facilitation of communication among nomadic or mobile device users is referred to as ad Hoc communications. For ad Hoc communication to occur, a network infrastructure must exist. The network infrastructure can be wireless, wired or a combination. By way of example, a mobile user that is a visitor to a building may wish to connect a personal computer to a host network in the building in order to use the available services. The use of service discovery methods is known to those of skill in the art in order to determine what services are available, or if a particular desired service is available.

Service discovery methods are processes in which a device continuously searches a network (or networks) to which the device is connected to determine what services are available. These services can include, for example, printers, facsimile machines, projectors, cameras, scanners, etc.

There are many existing service discovery protocols known to those of skill in the art, including JINI, Service Location Protocol (SLP), Bluetooth Service Discovery Protocol (SDP), Salutation and UPnP.

Generally, many services that are not useful or practical to a user at a given time are discovered when using conventional service discovery methods. These services may not be useful or can be impractical because they are physically inaccessible.

The available services that are discovered may be narrowed down to those that are relevant by filtering the results so that only a particular type of service is visible. For example, when a user chooses the File/Print option from the menu of an application, only devices for printing are displayed. Specifying particular features of the service desired can further narrow the visible discovered services. In the above example, for instance, a user may narrow the printers displayed to only those printers that are capable of printing in color.

When available services have been narrowed to those that are relevant, the user must then determine which services are physically accessible. There is no indication of the proximity of the user to the service and further, there is no association between the service name and the physical device. Returning to the example of the printers, there is no indication of the proximity of the user to the printer and there is no association between service name and the printer in order to -aid in selection of an accessible or convenient printer.

The host network may be a fixed network or a wireless ad hoc network. A wireless ad hoc network refers to a network that is dynamically set up and torn down using dynamically created routing tables to accommodate the mobile devices that are connected and disconnected from the network. For wireless ad hoc networks, RF technology is generally employed because it passes through physical objects (it is not affected by physical objects) and due to its' broad beam transmission characteristics. While there are many advantages of the apparent transparency of physical objects to RF, this can be a problem for service discovery as all services within communication range are discovered. This can include inaccessible services such as devices located in other rooms, on other floors, or even in other buildings.

GB-A-2352588 discloses a method and a system for communicating resource properties to a mobile device in order to facilitate the selection of electronic services provided by said resource.

For that purpose GB-A-2352588 furthermore discloses a base station for communicating with a portable device via a first wireless communication link and a beacon device positioned in the vicinity of items of interest, said beacon device arranged to transmit identifying information associated with said items via a second wireless communication link to the portable device.

In the arrangement of GB-A-2352588 all information is sent to every device in the vicinity of said beacon device. There is no possibility to restrict or filter information, e.g. to send special information only to certain devices. Furthermore, all information of interest has to be sent via the second wireless communication link (i.e. that one between beacon and portable device) also in cases when said second communication link is slow compared to the first wireless communication link.

Another known system is that as shown in WO98/17032 which discloses a wireless peer-to-peer capability addressable network which can accommodate any number of peers. Network connections are formed over wireless links based on proximity between peers and upon needs and capabilities evaluation.

Accordingly, it is an object of an aspect of the present invention to provide a method of facilitating the selection of electronic services using infrared and a network address ID.

### Summary of the Invention

The invention is defined in the independent claims. Some optional features of the invention are defined in the dependent claims.

### Brief Description of the Drawings

The invention will be better understood with reference to the drawings, and following description, in which:
Fig. 1 is a block diagram of a system for facilitating service selection with a network ID according to a first embodiment of the present invention;
Fig. 2A is a flow chart of a method for facilitating service selection with a network ID according to the first embodiment of the present invention;
Fig. 2B is a sequence diagram of the method for facilitating service selection with a network ID of Fig. 2A following the ODP (Open Distributed Processing) principle of viewpoints (ITU-T Recommendations X901 to X905 | ISO/IEC 10746), and using UML (Unified Modeling Language -http://www:rational.com/uml) object-oriented methodology notation.
Fig. 3 is a block diagram of a system for facilitating service selection with a network ID according to a second embodiment of the present invention;
Fig. 4A is a flow chart of a method for facilitating service selection with at network ID according to the second embodiment of the present invention; and
Fig. 4B is a sequence diagram of the method for facilitating service selection with a network ID of Fig. 4A following the ODP principle of viewpoints and using UML object-oriented methodology notation.

### Detailed Description of Preferred Embodiments

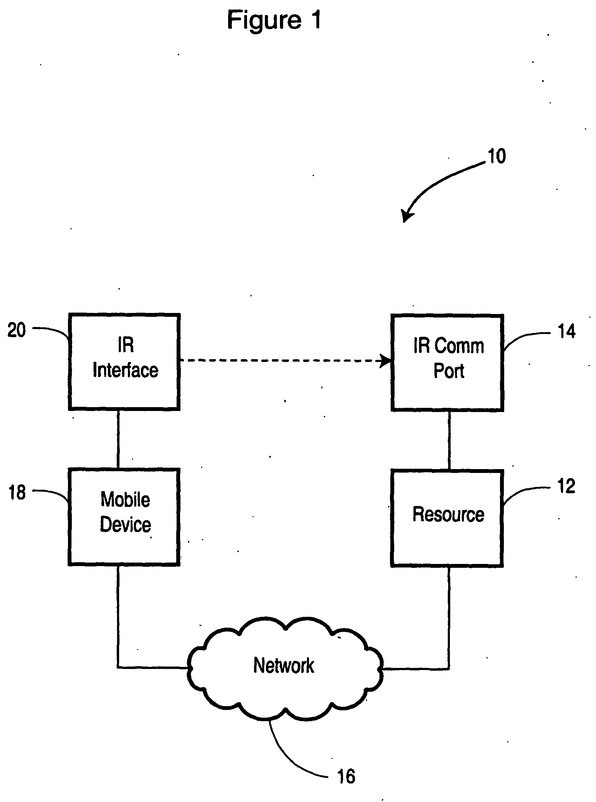

Reference is first made to Fig. 1 to describe a system for communicating a network address of an application to a resource for facilitating in the advertisement of the resource's service indicated generally by the numeral 10. In the present embodiment, system 10 has a resource 12 that includes a device that has an infrared (IR) communication port 14. The resource 12 is connected to a network 16. A portable electronic device 18, referred to as mobile device 18, is also connected to the network 16 and includes an IR interface 20. Thus the resource 12 and the mobile device 18 are interconnected through the network 16.

The mobile device 18 further includes a microprocessor, an input device, random access memory, read-only memory, a persistent storage device, and a network interface card, all of which are of conventional design and are not illustrated herein.

The resource 12 is operable to receive data through the IR communication port 14 using an infrared communication channel IRCC. Also, the mobile device 18 is operable to send data through the IR interface 20 using wide-angle IR light emitting diodes. The data is sent and received using low data rate, low cost, infrared technology, known to those of skill in the art. The resource 12 and the mobile device 18 are both further operable send and receive data through the network 16.

The mobile device 18 includes a consumer application (eg. Notetaker on a PDA) for which the use of the resource 12 is required to complete a job (eg. to print out a note).

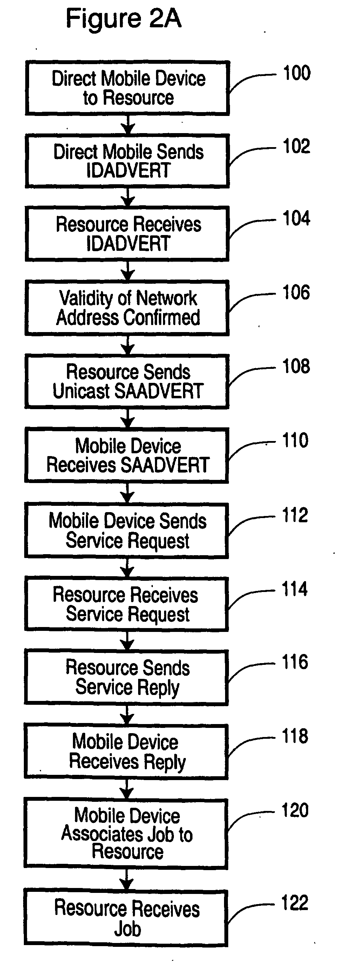

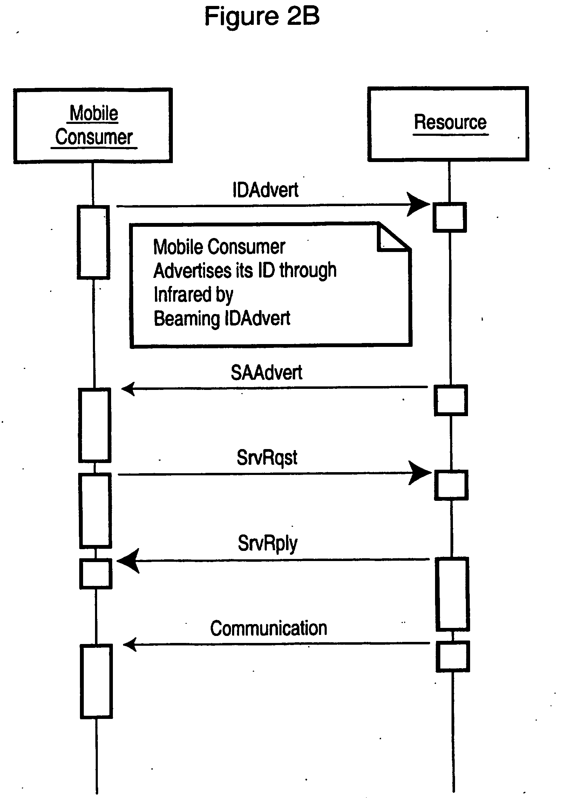

Referring now to Figs. 2A and 2B, at step 100 the mobile device 18 is directed to the resource 12, such that the IR interface 20 points toward the IR communication port 14. Thus, the resource 12 is ready to receive data, through the IR communication port 14, from the IR interface 20 of the mobile device 18.

At step 102, an IDADVERT message is sent from the IR interface 20 of the mobile device 18. The IDADVERT message is an identifier for the mobile device 18 on the network 16. In the present embodiment, this is an IP address.

At step 104, the resource receives the IDADVERT message from the mobile device 18, through the IR communication port 14. The information from the IDADVERT message, in this case the IP address of the mobile device 18, is stored by the resource 12.

At step 106, the resource 12 confirms the validity of the IP address of the mobile device 18. The resource checks for a properly structured IP address to ensure the address contains the right number of digits in the proper range. If the IP address of the mobile device 18 is confirmed, then the resource 12 proceeds to step 108. It is to be understood that if the resource 12 is unable to confirm the IP address the resource does not proceed to step 108 and does not respond.

At step 108, the resource 12 sends a unicast service agent Advertising message (SAADVERT) to the IP address of the mobile device 18 through the network 16. The unicast SAADVERT message includes an identifier for the resource 12 on the network 16. In the present embodiment, this is an IP address for the resource 12. The unicast SAADVERT message also includes a list of attributes that include properties of the resource 12.

At step 110, the mobile device 18 receives the SAADVERT message from the resource 12, through the network 16. The mobile device 18 stores the information from the SAADVERT message, including the IP address and list of attributes of the resource 12. The mobile device 18 is operable to display the attributes of the resource 12 for a user to determine if the resource 12 has the required services.

At step 112, the mobile device 18 sends a unicast service request message (SrvRqst) to the IP address of the resource 12, through the network 16. The service request message includes a condition on the properties of the resource, as will be explained in greater detail below.

The resource 12 receives the service request message from the mobile device 18 at step 114. At this point the resource 12 determines if the services requested in the service request message are provided by the resource 12.

If it is determined at step 114 that the services requested in the service request message are provided by the resource 12, the resource replies by sending a service reply (SrvRply) to the IP address of the mobile device 12 at step 116. The service reply includes information required to access the resource (an access point), for example a uniform resource locator (URL). It will be understood that if the resource cannot provide the service, it will not respond to SrvRqst message.

At step 118, the mobile device 18 receives the service reply message which contains a URL to the access point of the resource. This is sufficient to create a Connection with the resource 12.

At step 122, the job is sent from the mobile device 18, through the network 16 to the resource 12 using the access point provided in step 116.

Referring to Fig. 2B, the content of the messages of the present embodiment is summarized below. The format for this is *MessageName {Value1, Value2, ...}*. The invention does not assume that it is implemented using a particular service discovery protocol like SLP or Jini, but the terminology and functionality of some of the message names conforms to those used in SLP.
• IDADvert {Mobile Device Address,...}
   • Mobile Device Address - An identifier for the mobiledevice that requires a resource on the network (commonly an IP address).

This information can, for example, be stored in a structure with a variable representing the address, IDAdvert_IP_Address = 123.123.123.123.
• SAADvert {Resource Address, Attributes,...}
   • Resource Address - An identifier for the resource device on the network (commonly an IP address).
   • Attributes - A list of attributes of the resource. They express properties of the resource.

For a display resource, for example, the following exemplary properties can be listed, color = TrueColor, resolution = 480x512, etc...

A typical SrvRqst (service request message) would include a sender address, a destination address, a service descriptor, and a set of predicates that need to be evaluated by the receiver in order to determine if it should respond to the SrvRqst message.
• SrvRqst { Mobile Device Address, Resource Address, Resource Descriptor, Predicates,...}
   • Resource Descriptor - A description of the resource requested.
   • Predicates - A condition on the properties of a resource.
• SrvRply {Mobile Device Address, Resource Address, Resource Access Point, ...}
   • Resource Access Point - Information required to access the resource (In SLP it is a URL, in Jini it is an object).

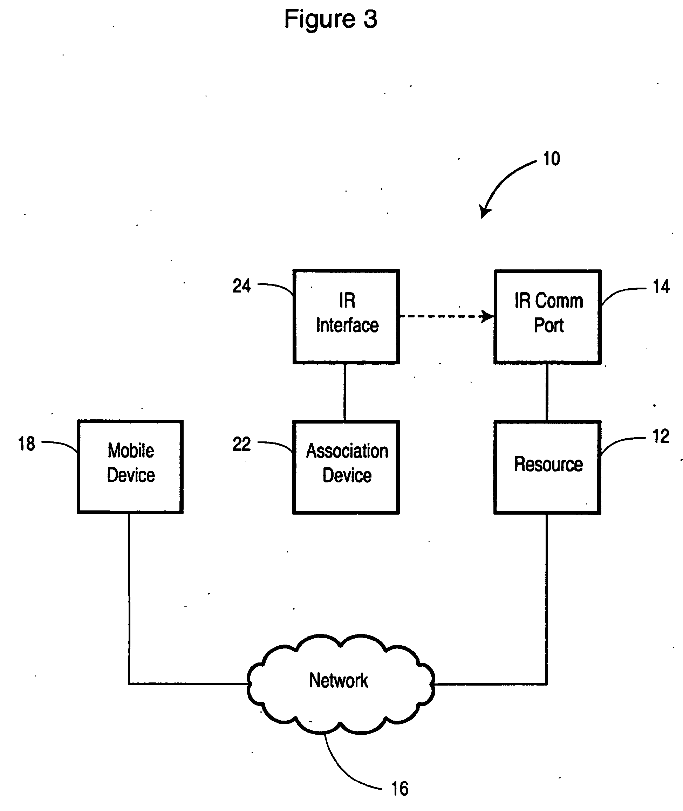

Reference is now made to Fig. 3 to describe a second embodiment of the present invention, in which the device in which the consumer application resides and the device used for association with the resource are separate of each other. For the purpose of simplicity of description, numerals used previously in the first described embodiment will be used again where the parts and steps correspond to those already described.

System 10 has a resource 12 that includes a device that has an infrared (IR) communication port 14. The resource is connected to network 16 as in the first embodiment. A mobile device 18, is connected to the network 16 by physical or by wireless connection. In the present embodiment, the mobile device 18 does not include an IR interface for establishing a connection with the resource 12, as in the first embodiment. Thus, an association device 22 that includes a bi-directional IR interface 24 is used to establish the connection.

The resource 12 is operable to receive data through the IR communication port 14 using an infrared communication channel IRCC. Conversely, the association device 22 is operable to send data through the IR interface 24 using wide-angle IR light emitting diodes. Thus, the association device 22 includes an IR association protocol for sending data. The data is sent using low data rate, low cost, infrared technology, known to those of skill in the art. Also, the resource 12 and the mobile device 18 are operable to each send and receive data through the network 16.

In the present embodiment, the association device 22 is a PDA, however other association devices can be used. For example, meme tags or Parctabs can be used to transport the IDAdvert message

Similar to the first embodiment, the mobile device 18 includes a consumer application for which the use of the resource 12 is desired to complete a job. The association device 22 contains information including the IP address of the mobile device 18.

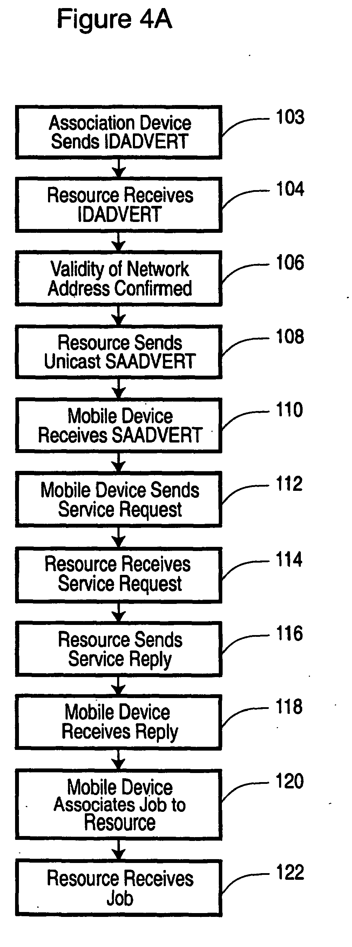

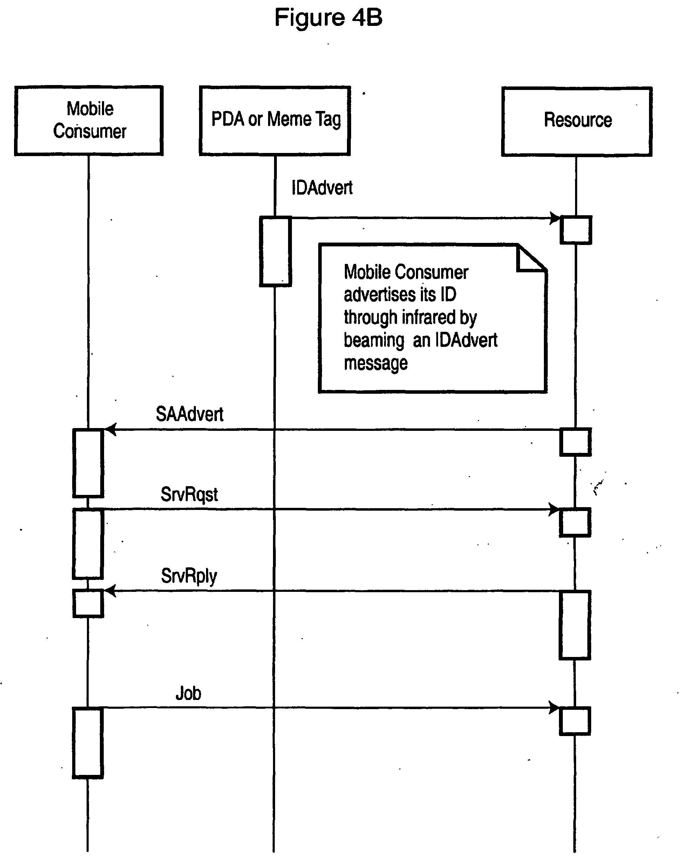

Referring now to Figures 4A and 4B, at step 103 the association device 22 sends an IDADVERT message from the IR interface 24. In the present embodiment, message format and content is similar to that of the first described embodiment.

It is to be understood that after step 103 is completed in which the IDADVERT message is sent to the resource 12, steps 104 to 122 of Fig. 4A are similar to steps 104 to 122 of Fig. 2A. Thus, steps 104 to 122 will not be further described herein.

It is contemplated that the present invention can be applied to any system where it is necessary to associate an application to a particular resource. For example, the present invention can be used in the discovery of telephone sets in an office space or meeting room so that a user can forward incoming calls to a particular phone set. To forward the calls, the phone set identification must be determined. The telephone set must have an infrared transmitter/receiver and must be available to communicate over a network. The network can be established in an ad hoc manner using technology such as Bluetooth if the telephone sets include the appropriate communication devices. Alternatively, the telephone sets could respond back through the telephone network.

For example, a user enters a meeting room and has a PDA that is connected to the internet via a wireless access point. From this PDA the user can communicate to their virtual personal assistant which is an application that allows them to specify rules on how to divert incoming communication requests like phone calls. It is possible to forward incoming calls to any extension line using their virtual personal assistant The user wishes to forward their incoming calls to a nearby phone in the meeting room. The user points the PDA to the telephone set to which the incoming calls will be forwarded and sends the IDADVERT message as shown in steps 100 and 102 of Fig. 2. The telephone set can advertise its' "telephone service" to the PDA and the PDA can request the service interface using a service request. The service reply then returns the location address information of the telephone, which can then be used by the PDA to tell the virtual personal assistance where to forward the user's calls.

While the embodiments discussed herein are directed to particular implementations of the present invention, it will be apparent that variations and modifications to these embodiments are within the scope of the invention as defined solely by the claims appended hereto. For example, the mobile device 18 can be a personal digital assistant, a laptop personal computer or other portable electronic device, as would occur to one of skill in the art. Also, the services can include, for example, printers, facsimile machines, projectors, cameras, scanners and the like. Also, rather than a PDA, a meme tag, a smart card or a remote control unit can be used as the association device. The association device can be any device that supports one way IR communication and is operable to enter the mobile device address. All such variations and modifications will be understood by a person of ordinary skill in the art.

## Claims

1. A method of communicating properties of a resource (12) located on a network (16), the resource having a separate IR communications capability, the method being for facilitating the selection of electronic services available at said resource, the method comprising the steps of:
directing a mobile device (18), said mobile device being connected to the network, or an association device (22) associated with the mobile device for point to point IR communication with the resource;
receiving at the resource an ID advertising message from the mobile device or the association device through an infrared communication port (14) of said resource using an infrared communication channel, the ID advertising message containing a network address for the mobile device; and
sending a service agent advertising message to the network address of the mobile device via the network, the service agent advertising message including the network address for the network and the properties of the resource.

2. The method of communicating properties of a resource for facilitating the selection of electronic services at said resource according to claim 1, further comprising the steps of:
receiving a service request from the mobile device; and
sending a service reply to the network address of the mobile device, the service reply including information required to access the resource at an access point.

3. The method of communicating properties of a resource for facilitating the selection of electronic services at said resource according to claim 1 or claim 2, further comprising the steps of:
confirming the validity of the network address using a predefined verification protocol, prior to the step of sending a service agent advertising message.

4. The method of communicating properties of a resource for facilitating the selection of electronic services at said resource according to any preceding claim, further comprising the steps of:
receiving a job from the mobile device, the job being received at the access point.

5. The method of communicating properties of a resource for facilitating the selection of electronic services at said resource according to any preceding claim, wherein the step of receiving the service request from the mobile device includes the step of determining if the services requested in the service request message are provided by the resource.

6. A system for communicating resource (12) properties for facilitating the selection of electronic services, the system comprising:
a resource (12) having an infrared point to point communication port (14) and a network port, the resource being operable to receive data from a mobile device (18) connected to the network or an association device (22) associated with the mobile device through the infrared communication port using an infrared communication channel, said data comprising an ID advertising message including the network address of the mobile device;
the resource being connected to a network (16) at the network port and being further operable to send a service agent advertising message to a network address of the mobile device via the network, the service agent advertising message including a network address and properties of the resource;
said properties including electronic services provided by the resource.

7. The system for communicating resource properties for facilitating the selection of electronic services according to claim 6, the resource being further operable to receive a service request from the mobile device and to send a service reply to the mobile device, the service reply including information required to access the resource at an access point.

8. The system for communicating resource properties for facilitating the selection of electronic services according to claim 6 or claim 7, wherein the resource is further operable to confirm the validity of the network address of the mobile device using a predefined verification protocol.

9. The system for communicating resource properties for facilitating the selection of electronic services according to any of claims 6 to 8, wherein the resource is further operable to receive a job at the access point.

## Patentansprüche

1. Verfahren zum Kommunizieren von Eigenschaften einer in einem Netzwerk (16) befindlichen Ressource (12), wobei die Ressource eine eigene IR-Kommunikationsfähigkeit aufweist, wobei das Verfahren dazu dient, die Auswahl von an der Ressource verfügbaren elektronischen Diensten zu erleichtern, wobei das Verfahren folgende Schritte aufweist:
Ausrichten eines mobilen Gerätes (18), wobei das mobile Gerät mit dem Netzwerk verbunden ist, oder eines Anbindungsgerätes (22), das dem mobilen Gerät zugeordnet ist, für eine Punkt-zu-Punkt-IR-Kommunikation mit der Ressource;
Empfangen an der Ressource einer ID-Ankündigungsmitteilung von dem mobilen Gerät oder von dem Anbindungsgerät über einen Infrarot-Kommunikationsport (14) der Ressource unter Verwendung eines Infrarot-Kommunikationskanals, wobei die ID-Ankündigungsmitteilung eine Netzwerkadresse für das mobile Gerät beinhaltet; und
Senden einer Dienstvermittlungs-Ankündigungsmitteilung an die Netzwerkadresse des mobilen Knotens über das Netzwerk, wobei die Dienstvermittlungs-Ankündigungsmitteilung die Netzwerkadresse für das Netzwerk und die Eigenschaften der Ressource beinhaltet.

2. Verfahren zum Kommunizieren von Eigenschaften einer Ressource zur Erleichterung der Auswahl elektronischer Dienste an der Ressource nach Anspruch 1, welches weiters folgende Schritte aufweist:
Empfangen einer Dienstanforderung von dem mobilen Knoten; und
Senden einer Dienst-Rückantwort an die Netzwerkadresse des mobilen Gerätes, wobei die Dienst-Rückantwort Informationen beinhaltet, die für einen Zugang zu der Ressource an einem Zugangspunkt erforderlich sind.

3. Verfahren zum Kommunizieren von Eigenschaften einer Ressource zur Erleichterung der Auswahl elektronischer Dienste an der Ressource nach Anspruch 1 oder Anspruch 2, welches weiters folgende Schritte aufweist:
Bestätigen der Gültigkeit der Netzwerkadresse unter Verwendung eines vorbestimmten Verifizierungsprotokolls, bevor der Schritt des Sendens einer Dienstvermittlungs-Ankündigungsmitteilung durchgeführt wird.

4. Verfahren zum Kommunizieren von Eigenschaften einer Ressource zur Erleichterung der Auswahl elektronischer Dienste an der Ressource nach einem der vorhergehenden Ansprüche, welches weiters folgende Schritte Aufweist:
Empfangen eines Auftrags von dem mobilen Gerät, wobei der Auftrag an dem Zugangspunkt empfangen wird.

5. Verfahren zum Kommunizieren von Eigenschaften einer Ressource zur Erleichterung der Auswahl elektronischer Dienste an der Ressource nach einem der vorhergehenden Ansprüche, wobei der Schritt des Empfangens der Dienstanforderung von dem mobilen Gerät, den Schritt beinhaltet, zu ermitteln, ob der in der Dienstanforderungs-Mitteilung angeforderte Dienst von der Ressource bereitgestellt wird.

6. System zum kommunizieren von Eigenschaften einer Ressource (12) um die Auswahl elektronischer Dienste zu erleichtern, wobei das System aufweist:
Eine Ressource (12), welche einen Infrarot-Punkt-zu-Punkt-Kommunikationsport (14) und einen Netzwerkport aufweist, wobei die Ressource betriebsfähig ist, um Daten von einem mit dem Netzwerk verbundenen mobilen Gerät (18) oder von einem dem mobilen Gerät zugeordneten Anbindungsgerät (22), über den Infrarot-Kommunikationsport unter Verwendung eines Infrarot-Kommunikationskanals zu empfangen, wobei die Daten eine ID-Ankündigungsmitteilung aufweisen, die die Netzwerkadresse des mobilen Gerätes beinhaltet;
wobei die Ressource an dem Netzwerkport mit einem Netzwerk (16) verbunden ist und weiters betriebsfähig ist, eine Dienstvermittlungs-Ankündigungsmitteilung an eine Netzwerkadresse des mobilen Gerätes über das Netzwerk zu senden, wobei die Dienstvermittlungs-Ankündigungsmitteilung eine Netzwerkadresse und Eigenschaften der Ressource beinhaltet;
wobei die Eigenschaften elektronische Dienste beinhalten, die von der Ressource bereitgestellt werden.

7. System zum kommunizieren von Eigenschaften einer Ressource um die Auswahl elektronischer Dienste zu erleichtern nach Anspruch 6, wobei die Ressource weiters betriebsfähig ist, eine Dienstanforderung von dem mobilen Gerät zu empfangen, und um eine Dienst-Rückantwort an das mobile Gerät zu senden, wobei die Dienst-Rückantwort Informationen beinhaltet, die für einen Zugang zu der Ressource an einem Zugangspunkt erforderlich sind.

8. System zum kommunizieren von Eigenschaften einer Ressource um die Auswahl elektronischer Dienste zu erleichtern nach Anspruch 6 oder Anspruch 7, wobei die Ressource weiters betriebsfähig ist, die Gültigkeit der Netzwerkadresse des mobilen Gerätes unter Verwendung eines vorbestimmten Verifizierungsprotokolls zu bestätigen.

9. System zum kommunizieren von Eigenschaften einer Ressource um die Auswahl elektronischer Dienste zu erleichtern nach einem der Ansprüche 6 bis 8, wobei die Ressource weiters Betriebsfähig ist, einen Auftrag an dem Zugangspunkt zu empfangen.

## Revendications

1. Procédé de communication de propriétés d'une ressource (12) située sur un réseau (16), la ressource ayant une fonction de communication infrarouge séparée, le procédé servant à faciliter la sélection de services électroniques disponibles au niveau de ladite ressource, le procédé comprenant les étapes suivantes :
la direction d'un dispositif mobile (18), ledit dispositif mobile étant connecté au réseau, ou d'un dispositif d'association (22) associé au dispositif mobile pour une communication infrarouge point à point avec la ressource ;
la réception au niveau de la ressource d'un message d'annonce d'identification venant du dispositif mobile ou du dispositif d'association par un port de communication infrarouge (14) de ladite ressource en utilisant un canal de communication infrarouge, le message d'annonce d'identification contenant une adresse réseau pour le dispositif mobile, et
l'envoi d'un message d'annonce d'agent de service à l'adresse réseau du dispositif mobile par le biais du réseau, le message d'annonce d'agent de service incluant l'adresse réseau pour le réseau et les propriétés de la ressource.

2. Procédé de communication de propriétés d'une ressource pour faciliter la sélection de services électroniques au niveau de ladite ressource suivant la revendication 1, comprenant en outre les étapes suivantes :
la réception d'une demande de service venant du dispositif mobile, et
l'envoi d'une réponse de service à l'adresse réseau du dispositif mobile, la réponse de service incluant des informations requises pour accéder à la ressource en un point d'accès.

3. Procédé de communication de propriétés d'une ressource pour faciliter la sélection de services électroniques au niveau de ladite ressource suivant la revendication 1 ou 2, comprenant en outre l'étape suivante :
la confirmation de la validité de l'adresse réseau en utilisant un protocole de vérification prédéfini, avant l'étape d'envoi d'un message d'annonce d'agent de service.

4. Procédé de communication de propriétés d'une ressource pour faciliter la sélection de services électroniques au niveau de ladite ressource suivant l'une quelconque des revendications précédentes, comprenant en outre l'étape suivante :
la réception d'un travail venant du dispositif mobile, le travail étant reçu au point d'accès.

5. Procédé de communication de propriétés d'une ressource pour faciliter la sélection de services électroniques au niveau de ladite ressource suivant l'une quelconque des revendications précédentes, dans lequel l'étape de réception de la demande de service venant du dispositif mobile inclut l'étape de détermination du fait que les services demandés dans le message de demande de service sont fournis ou non par la ressource.

6. Système de communication de propriétés d'une ressource (12) pour faciliter la sélection de services électroniques, le système comprenant:
une ressource (12) comportant un port de communication infrarouge point à point (14) et un port réseau, la ressource étant à même de recevoir des données venant d'un dispositif mobile (18) connecté au réseau ou d'un dispositif d'association (22) associé au dispositif mobile par le port de communication infrarouge en utilisant un canal de communication infrarouge, lesdites données comprenant un message d'annonce d'identification incluant l'adresse réseau du dispositif mobile ;
la ressource étant connectée à un réseau (16) au niveau du port réseau et étant en outre à même d'envoyer un message d'annonce d'agent de service à une adresse réseau du dispositif mobile par le biais du réseau, le message d'annonce d'agent de service incluant une adresse réseau et des propriétés de la ressource ;
lesdites propriétés incluant des services électroniques fournis par la ressource.

7. Système de communication de propriétés d'une ressource pour faciliter la sélection de services électroniques suivant la revendication 6, la ressource étant en outre à même de recevoir une demande de service venant du dispositif mobile et d'envoyer une réponse de service au dispositif mobile, la réponse de service incluant des informations requises pour accéder à la ressource en un point d'accès.

8. Système de communication de propriétés d'une ressource pour faciliter la sélection de services électroniques suivant la revendication 6 ou 7, dans lequel la ressource est en outre à même de confirmer la validité de l'adresse réseau du dispositif mobile en utilisant un protocole de vérification prédéfini.

9. Système de communication de propriétés d'une ressource pour faciliter la sélection de services électroniques suivant l'une quelconque des revendications 6 à 8, dans lequel la ressource est en outre à même de recevoir un travail au point d'accès.
